Europäisches Patentamt

European Patent Office

Office européen des brevets

(19)

(11) Publication number: **0 016 477**
**B1**

(12) **EUROPEAN PATENT SPECIFICATION**

(45) Date of publication of patent specification: **29.12.82**

(51) Int. Cl.³: **H 04 L 11/20, H 04 J 6/00**

(21) Application number: **80101591.8**

(22) Date of filing: **26.03.80**

(54) **Method and device for speech signal reconstruction in packet switched telecommunication networks.**

(30) Priority: **27.03.79 IT 6762879**

(43) Date of publication of application:
**01.10.80 Bulletin 80/20**

(45) Publication of the grant of the patent:
**29.12.82 Bulletin 82/52**

(84) Designated Contracting States:
**DE FR GB NL**

(56) References cited:
**EP - A - 0 006 798**
**DE - A - 2 818 505**
**FR - A - 2 242 829**
**US - A - 4 100 377**
**US - A - 4 168 400**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Barberis, Giulio**
**Via Leini, 32**
**Torino (IT)**
Inventor: **Pazzaglia, Daniele**
**Via Oropa, 116**
**Torino (IT)**

(74) Representative: **Riederer Freiherr von Paar zu Schönau, Anton**
**Müllerstrasse 31**
**D-8000 München 5 (DE)**

## Method and device for speech signal reconstruction in packet switched telecommunication networks

The invention relates to a method and a device for the reconstruction of the speech signal at a receiving node of a packet switched communication network, a transmitting node of which emits packets built up from digitized samples of said signal, relevant to the active signal periods (talkspurts), by utilizing a transmitting node clock time counting, the packets being received with a random delay varying for each packet, the receiving operations being controlled by a receiving node clock time counting, wherein the received packet is temporarily stored for a varying time lag before its introduction, controlled by the receiving node clock time counting, into the output queue of the receiving node such that the overall delay suffered by said packet is not lower than a predetermined minimum delay.

As known, in a packet-switched communication network the information at the source is digitized, coded and sent into the network under block (packet) form; the packets are generally of fixed length and are each associated with a heading containing the address, the serial number, control information, etc.

A communication network of this kind is advantageous in that it operates independently of the nature of the transmitted information (e.g. telephone signals, data, video signals) and consequently is particularly suited for realizing the service integration that is one of the present goals of the telecommunication operating companies.

In a packet-switched network, however, a random delay is introduced between the packet source and the receiver, and said delay can be different for each packet; in case of speech signal this causes a perturbed reception, as unwanted pauses can be introduced into the active voice periods (talkspurts) and said talkspurts can be separated by pauses different from those existing at the source.

This problem is well known in the technical literature, but no proper solution has been suggested till now.

It is known (US—PS 4 100 377) to introduce the additional time lag mentioned above so as to reduce the variance of the random delay. To this end, in the connection between the transmitting end packetizer and the receiving end packet receiver, besides the packet transmission lines also a service line is provided which communicates the transmitter clock to the receiving end for synchronizing the receiver clock. The prior art seems to provide for packets comprising several talkspurts. However, use of the service line as well as the relation of packets and talkspurts in the prior art limit the use of this solution to particular applications.

On the contrary, the invention teaches that, when the receiving node clock time counting is independent from the transmitting node clock time counting and is started upon reception of the first received packet of a conversation, the varying time lag is made dependent on an estimate of the delay suffered by the first packet of each talkspurt, the estimate being progressively made to converge to the actual value of said delay suffered by the first packet of each talkspurt by progressive synchronization of the receiving node clock time counting to the transmitting node clock time counting.

This solution may be further sophisticated by the measures claimed in the subclaims, including the device for carrying out the method of the invention.

These and other characteristics of the invention will become clearer from the following description of a preferred embodiment thereof given by way of non limitative example and shown in the annexed drawings, in which:

Fig. 1 is a block diagram of a packet-switched speech transmission system;

Fig. 2 is a block diagram of the device according to the invention;

Fig. 3 is a flow chart of the operation of the device of Fig. 2.

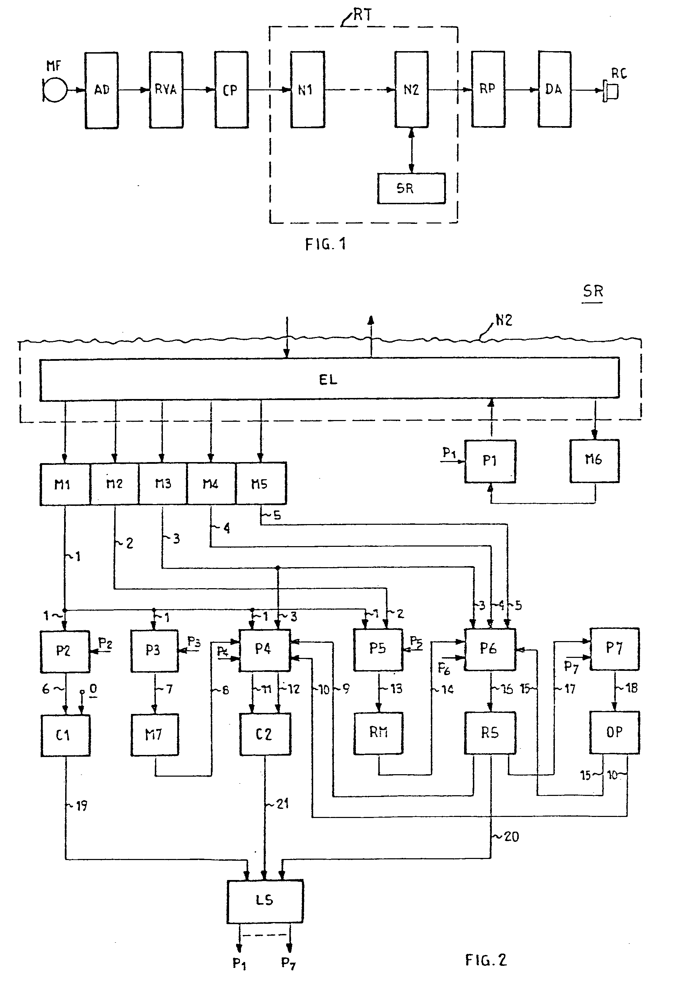

Fig. 1 shows the connection between two subscribers, schematized by microphone MF and receiver RC, in a packet switched network RT comprising the device object of the invention.

Microphone MF is connected to node N1 (in the following referred to as transmitting node or source) of network RT through an analog-to-digital converter AD, converting the analog speech signal into a signal say of PCM type, a detector of active speech RVA, eliminating the phonetic and expressive pauses of the signal, and a packetizer CP organizing the PCM samples into fixed-length packets. By way of example, a packet can comprise 256 PCM samples corresponding to 32 ms of conversation. Each packet comprises in addition to the speech signal (that is to the 256 samples) a heading containing service information. Of this information, the birth time of the packet (information present if the packet itself is the first one of a talkspurt) and the serial number of the packet inside the talkspurt are of interest for the invention.

A second node N2 of this network (hereinafter referred to as receiving node) is followed by a packet receiver RP, which reconstructs the PCM samples of the speech signal by accepting the packets in the same order in which they have been transmitted, an digital-to-analog converter DA and receiver RC. The reception at node N2 is controlled by a clock that is independent of the transmission clock and is started when the node itself receives for the first time a packet concerning a conversation.

In network RT the packet suffers a deterministic delay, equal for all packets and due to service times (transmission, switching, etc.), and a random delay varying according to the packet. This latter, which is due to the asynchronism of packet switched communications and is function of the traffic level, causes a perturbed reception. To overcome this drawback, node N2 is associated with a device, incorporating the invention, denoted by SR, whose tasks are:

1) to estimate the delay suffered by the first packet of each talkspurt: the knowledge at the receiver of such delay is not exact (that is it can be only estimated) owing to the unknown random offset between transmission and reception clocks. The better the synchronism between the two clocks, the better the estimate: thus device SR must also synchronize the two clocks;

2) by utilizing the delay estimate, to introduce an additional time lag, whenever required, for the first talkspurt packet, so as to reduce the delay variance. By introducing the additional time lag for the first packet of a talkspurt, the irregular reception and the probability of unwanted idle periods inside the reconstructed talkspurt can be reduced.

The structure of SR will be described with reference to Fig. 2; blocks RVA, CP, N1, N2, RP will not be described as they are well known in the technique.

In Fig. 2 M1, M2, M3, M4, M5 denote five memories or registers that are written by processor EL of node N2; the content of such memories is presented on respective output connections 1, 2, 3, 4, 5 so that it can be transferred to other units of device SR upon command of a sequential programmable logic network LS.

Memory M1 stores, for each packet it receives from processor EL, the relative serial number reduced by one, i.e. $(k-1)$; value k is supplied by processor EL that reads it from the packet heading.

Memory M2 stores the value Ts of emission or reception time of a packet, that is the time necessary to build up a packet from a determined number of samples or to reconstruct the samples from the packet. This value Ts is obviously constant for the whole network.

Memory M3 stores a control time $T\lambda$ corresponding to the minimum delay that, for the above mentioned reasons, must be suffered by the first packet of each talkspurt; this time depends on the degree of occupation of the network and is estimated by known techniques, that present no interest from the invention standpoint. An example is described by G. Barberis and G. Micca in the paper "A new routing algorithm for computer communication network", presented at the meeting ICC 78 (memory 27.5).

Memory M4 stores the value Td of the total service time (switching, transmission and so on), that is of deterministic delay.

Memory M5 stores value $t_s$ of the birth time (departure instant) of the first packet of a talkspurt according to the source clock; also value $t_s$ is stored in the packet heading.

M6 denotes a buffer memory that stores each packet arriving at EL for a time determined by the method according to the present invention, as it will be described in further deail hereinafter. This time may also be zero. When this time is over, the packet is fed again to node processor EL to be sent to packet receiver RP (Fig. 1). This transfer takes place through a gate P1 and is controlled by a signal $p_1$ coming from LS.

References P2, P3, P4, P5, P6, P7 denotes six further gates, that open upon command of signals $p_2 \ldots p_7$ supplied by LS, to allow communication among the various units of synchronizing device SR.

More particularly the input of gate P2 is connected to output connection 1 of memory M1, and the output (connection 6) is connected to a first input of a comparator C1. A second input of said comparator is connected to a comparison threshold equal to 0, so that C1 is able to inform LS when the content of M1 is equal to 0, that is when the processed packet is the first one. The output of C1 is connected to logic LS through a connection 19.

The input of gate P3 is also connected to output connection 1 of memory M1 and the output is connected to a further memory (or register) M7 through connection 7. This memory M7 stores the contents of M1 whenever said contents are updated by processor EL.

Gate P4 has five inputs and two outputs. The inputs are connected through connections 1, 3, 8, 9, 10, respectively, with the outputs of memories M1, M3, M7, with an output of an adding register RS and one output of a programmable clock OP; the outputs are connected through connection 11, 12 with the inputs of a two-input comparator C2. Upon command of signal $p_4$, the gate connects outputs 11, 12 with inputs 1, 8 or inputs 9, 10 or yet inputs 9, 3. The characteristics and tasks of C2, RS, OP will be examined hereinafter.

Gate P5 has two inputs connected with outputs 1, 2 of memories M1, M2 respectively. The output 13 of P5 is connected with the input of a multiplying register RM that, for each packet with serial number $k \neq 1$, computes the time elapsed from the transmission of the first packet to the transmission of the interested packet. Hence register RM computes the value $(k-1)$ Ts.

Gate P6 has five inputs and one output. The inputs are connected, through connections 3, 4, 5, 14, 15 respectively, to the outputs of M3, M4, M5 RM and to a second output of programmable clock OP. The output of P6 is connected through connection 16 to the input of adding register RS.

The input of gate P7 is connected to a second output 17 of RS, and its output is connected through connection 18 to the input of programmable clock OP.

Programmable clock OP counts the receiver time and issues a receiving node clock time counting $t_r$, beginning from the first arrival at N2 (Fig. 1) of a packet relevant to a certain conversation. Therefore, initially it will be backwards out of phase with respect to the transmissing node clock time counting and it will be adjusted at the arrival of each packet to match it to said transmissing node clock. The information about the amplitude of the necessary adjustment of OP is supplied by RS through connection 17.

Adding register RS, according to the different phases of the process, computes:

— the estimated instant $t_x$ of arrival of the various packets at the receiver in case of absence of any random delay; this value is obtained by adding the time taken to build up all the packets, the first one excepted (time calculated in RM), deterministic delay Td (supplied by M4) and birth time $t_s$ of the first packet of a talkspurt (information supplied by M5). Consequently, for the k-th packet value $t_x$ will be given by the expression

$$t_x=(k—1)Ts+Td+t_s$$

— delay $t_d$ suffered by the packet with respect to the estimated arrival instant (supposing $t_r>t_x$, otherwise the delay is equal to 0); this delay is obtained by subtracting value $t_x$, previously calculated, from value $t_r$ of the actual instant of arrival of the packet, supplied by programmable clock OP.
— delay $T\lambda—t_d$, to be introduced for the first talkspurt packet; this value is supplied to LS through connection 20.

Comparator C2 is of a kind able to signal whether two equal values are present at its inputs or, in case the values are different, which is higher. The comparator must:

— compare the contents of memories M1 and M7 to cause the possible updating of the latter;
— check whether the estimated value $t_x$ of the arrival instant of the k-th packet (value supplied by RS) is less than the value $t_r$ indicated by the programmable clock; the comparison will generally give a negative result for the first packets received, and causes OP to be set to value $t_x$;
— check whether the value of control time $T\lambda$ stored in M3 is greater than estimated delay $t_d=t_r—t_x$ (the more synchronized the clocks the more correct this estimate).

The results of the comparisons are sent to LS through connection 21.

Finally programmable logic LS controls all the device operations, by receiving information from C1, C2, RS and generating opening commands for gates P1 ... P7.

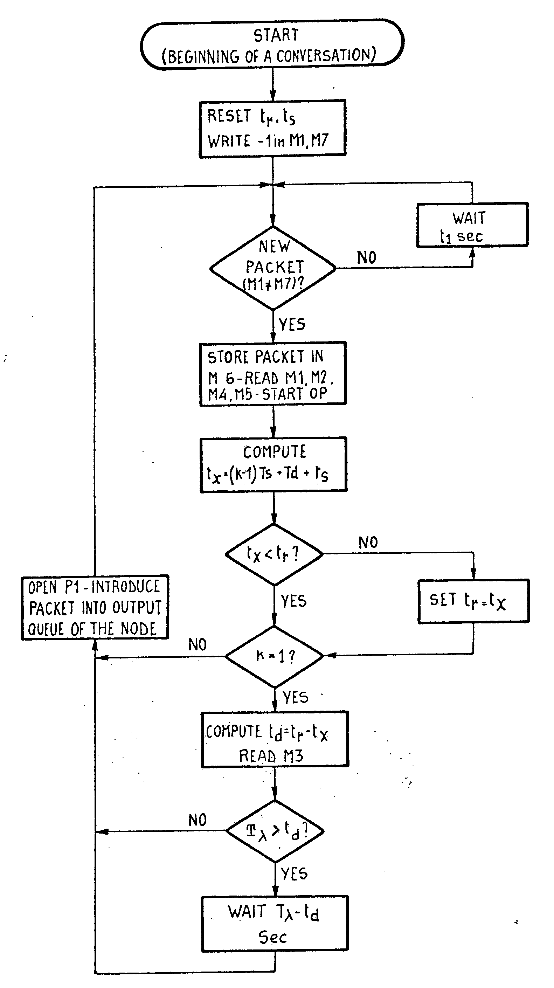

The operation of the device will be described with reference also to Fig. 3, where such operation is represented as a flow chart. In this chart, as usual, rectangles represent operations to be carried out and rhombs represent decisions to be taken.

At first, the following definitions already mentioned will be listed up:

delay=difference (time stretch) between birth time and time of arrival of a packet.
k=current number of the respective packet in a talkspurt.
Ts=constant=stretch of time for packet construction.
$T\lambda$=control time=minimum delay (stretch of time) of the first packet.
Td=total service stretch of time.
$t_s$=birth instant of the first packet of each talkspurt, coded in the first packet heading, measured from the birth instant of the first packet of the first talkspurt of a conversation.
$t_r$=receiving node clock time counting=counted value of the present instant, counting beginning from the first arrival of a packet of a conversation.
$t_x$=earliest possible instant of arrival of a packet: the value of $t_x$ for the generic k-th packet in a talkspurt is given by the sum of the birth instant of the first packet of the respective talkspurt, the time necessary for generating the (k—1) packets following the 1st one, i.e. (k—1)Ts, and Td, i.e. the minimum time necessary that the packet arrives at the receiver. Obviously, when the receiver clock is in steady condition, $t_x$ will be lower than $t_r$.
$t_d$=estimated delay of the first packet of a talkspurt=time lag between the actual and the estimated arrival of the respective packet;
$t_d$=0 if the receiving node clock has been updated and $t_r$ set to $t_x$.

The clock counting by Op is at first started by receiving the first packet of a conversation: initially $t_r$ is therefore 0 (so that $t_r<t_x$) and the clock is then being updated to $t_x$. The same check on the value of $t_r$ is made for all following packets: as the receiver clock has been started only at the reception of the first packet of the conversation, for some packets following the first one $t_r$ may still be lower than $t_x$, and an updating of the clock may be still necessary, but after a few packets the receiver clock will have become synchronized with the transmitter clock, so that $t_r$ will be normally greater than $t_x$. $t_s$ is 0 only for the first packet of the first talkspurt, so that in the expression giving the value of $t_x$ two terms, namely (k—1)Ts and $t_s$, are steadily increasing.

More particularly, before the beginning of a conversation, value —1 is present in memory M1 and consequently in M7, and clock Op is set to zero ($t_r$=0); logic LS keeps gate P4 in such a position that it can connect to comparator C2 memories M1, M7 (that is connects to outputs 11, 12 inputs 1 and 8) and cyclically (for instance every $t_1$ seconds) scans output 21 of C2 to detect the first arrival of a packet relevant to a conversation. Serial number k of this packet may differ from 1, that is the packet may not be first packet of the first talkspurt, owing to possible disturbances that can affect regular transmission.

The arrival of this packet is recognized due to the state variation of the output of C2, that signals the difference between the two inputs; in fact value k—1 will be present in M1 while value —1 will be still present in M7.

The packet arrived at node N2 will be transferred, upon command of processor EL, into memory M6, awaiting the accomplishment in the other devices of SR of the operations allowing the adjustment of clock OP and the decision on whether the packet must be delayed or transferred again to EL in order to be inserted into the output queue of the node. At the same time the information contained in the packet and interesting the process (serial number and possibly birth time) is transferred into memories M1 and M2.

As a consequence of the recognition of the arrival of a packet, LS starts programmable clock OP; besides it opens gate P3 in order to allow the storage into M7 of value k—1, and gate P5 to allow the transfer of values k—1 and Ts from memories M1, M2 to multiplying register RM, and connects in sequence output 16 of gate P6 with inputs 4, 5 to allow the storage into RS of values Td and $t_s$. This last value will be the actual birth time according to the source clock, if the packet is the first of the talkspurt, otherwise it will be 0.

Register RM computes the product (k—1) Ts and hence LS connects input 14 of P6 with output 16 thereof so as to transfer to RS said product, that is added to values Td and $t_s$ to give value $t_x$, i.e. the minimum possible value for the arrival instant of the packet.

Once $t_x$ has been computed, logic network LS operates P4 so as to connect inputs 9, 10 with outputs 11, 12, value $t_x$ and value $t_r$ indicated by OP are then supplied to C2 where they are compared.

As the first packet received for the conversation in progress is being examined, OP has been just started, so value $t_x$ will be higher than $t_r$. Logic network LS then opens gate P7 to allow the setting of clock OP to value $t_r$ computed by RS and the advance of Op from the indicated value $t_r$ to value $t_x$. After this updating of OP (or immediately after the comparison, in case C2 had informed that $t_r>t_x$), logic LS gets gate P2 opened to allow the transfer of value k—1, stored in M1, to comparator C1. Comparator C1 checks whether this value is null or not.

If k—1≠0, that is if the packet is not the first of a talkspurt, logic network LS opens gate P1 so that the examined packet is transferred again into EL, that inserts it into the output queue of node N2, for the reconstruction of speech signal in devices RP, DA and the transfer to subscriber RC. Of course the time necessary to carry out the operations described is negligible with respect to the average queueing time of a packet, that is why the slight delay introduced by SR does not practically affect the normal operation of the node.

If k—1=0, LS connects input 15 of gate P6 with output 16 so that time $t_r$ indicated by clock OP is stored in register RS. Register RS subtracts from that value value $t_x$ previously computed and supplies an estimated value $t_d$ of the delay suffered by the first packet.

As $t_x$ has been assumed higher than $t_r$, OP has been set to $t_x$ and the estimated delay will be zero. Then LS operates gate P4 so that comparator C2 receives value $t_d$ and value $T\lambda$ stored in M3. With the above assumptions, $t_d$ is zero and therefore $T\lambda$ is with no doubt higher than $t_d$. This information is sent to LS where a clock is made to count up to $T\lambda$; when $T\lambda$ is reached, LS opens P1 and the packet is sent from M6 to the processor to be introduced in the output queue of the node.

If by any chance $t_d$ were not null (for instance because $t_x$ was lower than $t_r$), logic network LS could open gate P1 after a time $T\lambda-t_d$, if $t_d<T\lambda$, or as soon as it receives the result of the comparison, if $t_d>T\lambda$. It will be appreciated that the first packet of a talkspurt is always inserted into the queue with a minimum delay $T\lambda$, possibly affected by estimate error.

Once the operations concerning the first packet are over, the contents of M1, M7 are compared again, to detect the arrival of a new packet, and the operations will be repeated as described. More particularly, for each packet the minimum value of the arrival instant will be compared with the time indicated by clock OP and the clock will be possibly regulated again and progressively synchronized with the transmission clock.

It is clear that after a rather limited number of packets the time of arrival $t_x$ will be not higher than value $t_r$, that is the two clocks can be considered synchronized.

After the estimate of the arrival instant, the packets with serial number k≠1 are inserted into the output queue of the node, while for packets with k=1 the delay is estimated. Of course the precision of this estimate, that utilizes value $t_r$ indicated by OP after the possible setting to value $t_x$, will increase as time goes by owing to the increasing synchronization of the two clocks. The reason why only the first packet in a talkspurt is possibly delayed up to $T\lambda$ is that, by doing so, possible gaps separating the first packet from the other can be eliminated or reduced, thereby facilitating the correct voice reconstruction (in fact, in a talkspurt there should not be pauses); if the delay would be introduced also for the other packets in the talkspurt, unwanted pauses could be introduced at the reconstruction.

## Claims

1. Method for the reconstruction of the speech signal at a receiving node of a packet switched communication network, a transmitting node of which emits packets built up from digitized samples of said signal, relevant to the active signal periods (talkspurts), by utilizing a transmitting node clock time counting, the packets being received with a random delay varying for each packet, the receiving operations being controlled by a receiving node clock time counting, wherein the received packet is temporarily stored for a varying time lag before its introduction, controlled by the receiving node clock time counting, into the output queue of the receiving node such that the overall delay suffered by said packet is not lower than a predetermined minimum delay, characterized in that, the receiving node clock time counting $(t_r)$ is independent from the transmitting node clock time counting and is started upon reception of the first received packet of a conversation and the varying time lag is made dependent on an estimate of the delay $(t_d)$ suffered by the first packet of each talkspurt, the estimate being progressively made to converge to the actual value of said delay suffered by the first packet of each talkspurt by progressive synchronization of the receiving node clock time counting to the transmitting node clock time counting.

2. Method according to claim 1, characterized in that said synchronization is effected by determining the minimum possible value $(t_x)$ for the arrival instant of each packet, on the basis of the time taken to build up all the preceding packets, of the birth time $(t_s)$ of the first packet of a talkspurt and of the deterministic service time (Td) of the network, by comparing said minimum value $(t_x)$ with the time counting value $(t_r)$ indicated by the receiving node clock (OP) and advancing said receiving node clock (OP) to said minimum delay $(t_x)$ in case this one is higher than the value $(t_r)$ indicated by the receiving clock (OP).

3. Device associated to a receiving node of a packet-switched communication network for realizing the method according to claim 1 or 2, characterized in that it comprises the following units:

— a buffer memory (M6) temporarily storing the packets received and introducing for the first packet of each talkspurt the possible additional time lag;
— a bank of five memory devices (M1, M2, M3, M4, M5) storing for every packet, respectively: the serial number decreased by 1 unit $(k-1)$; the time taken to form a packet (Ts); the value of the minimum delay $(T\lambda)$ that the first packet of each talkspurt must suffer; the overall service time (Td); and the birth time $(t_s)$ of the first packet of a talkspurt;
— a further memory (M7) connected to the first memory (M1) of said bank and storing the contents thereof whenever said first memory is updated;
— a first comparator (C1) having one input connected to the first memory (M1) of said bank and a second input connected to a comparison threshold fixed and equal to 0, said comparator comparing the contents of said memory (M1) with said threshold, and signalling whether or not the processed packet is the first of a talkspurt;
— a multiplying register (RM), connected with the first and second memories (M1, M2) of said bank, and computing the time $[(k-1)Ts]$ elapsed between the transmission of the first packet of a talkspurt and the transmission of the packet that is being processed;
— a programmable clock (OP), that indicates the time starting from the instant of the first reception of a packet relevant to a conversation and that, at the arrival of a packet, is advanced towards the minimum possible value $(t_x)$ for the arrival instant of such packet until value $(t_r)$ is higher than or equal to said minimum value $(t_x)$;
— an adding register (RS) that is connected with said multiplying register (RM), said programmable clock (OP) and the third, fourth and fifth memories (M3, M4, M5) of said bank, in order to compute said minimum possible value $(t_x)$ for the instant of arrival, to estimate the delay $(t_d)$ suffered by the first packet of a talkspurt and to determine, on the basis of said delay, the possible additional time lag $(T\lambda-t_d)$ said packet is to suffer;
— a second comparator (C2) with two inputs, able either to signal that two values present on said inputs are equal, or in case of inequality, to signal which value is higher, said inputs being connectable in turns to the first memory of said bank (M1) and to said further memory (M7) to recognize the arrival of a new packet, or to said adding register (RS) and to said programmable clock (OP) to compare the time count value $(t_r)$ indicated by the clock (OP) with said minimum possible value $(t_x)$ for the arrival instant of a packet, or yet to the third memory (M3) of said bank and to said adding register (RS), to determine whether the estimated delay $(t_d)$ for the first packet of a talkspurt is still inferior to the minimum time lag $(T\lambda)$ to be introduced;
— a first gate (P1) able to establish the connection between said buffer memory (M6) and the node processor;
— six further gates (P2 ... P7) able to establish the connections between the various units of the device;
— a sequential logic network (LS) programmed so as to control the opening of said gates on the basis of information it receives from the first and second comparator (C1, C2) and the adding register (RS).

**Revendications**

1. Procédé pour la reconstruction du signal vocal dans un noeud récapteur d'un réseau à commutation par paquet, dont un noeud de transmission émet des paquets qui sont formés à partir des échantillons numériques dudit signal, relatifs aux périodes (talkspurts) où il est actif, d'après un comptage du temps d'hologe du noeud de transmission, et sont reçus avec un retard casuel variable selon le paquet, les opérations de réception étant contrôlées par un comptage du temps d'horloge du noeud de réception, le paquet reçu étant mémorisé temporairement, avant d'être introduit dans la queue de sortie du noeud de réception sous le contrôle de l'horloge du même noeud, pendant un temps variable et tel que le retard total subi par ce paquet ne soit pas inférieur à un retard minimum prédéterminé, caractérisé en ce que le comptage du temps ($t_r$) d'horloge du noeud du réception est indépendant de celui du noeud de transmission et est mis en marche lorsque ce noeud de réception reçoit pour la première fois un paquet relatif à une conversation, et le temps variable de mémorisation dépend d'une estime du retard ($t_d$) subi par le premier paquet de chaque période du signal actif, estime que l'on fait converger sur la valeur réelle au moyen d'une synchronisation progressive du comptage du temps des horloges du noeud de réception et de transmission.

2. Procédé selon la revendication 1, caractérisé en ce que cette synchronisation est effectuée en déterminant la valeur minimum possible ($t_x$) pour l'instant d'arrivée de chaque paquet, d'après le temps de formation de tous les paquets précédents, l'instant ($t_s$) de départ du premier paquet d'une période de signal actif et le temps de service déterministe du réseau ($T_d$), en comparant cette valeur minimum ($t_x$) avec la valeur ($t_r$) marquée par l'horloge du noeud de réception (OP), et en faisant avancer cette horloge du noeud de réception (OP) jusqu'à la valeur minimum ($t_x$) lorsque cette dernière est supérieure à la valeur ($t_r$) marquée par l'horloge de réception (OP).

3. Dispositif associé à un noeud récepteur d'un réseau à commutation par paquets pour la réalisation du procédé selon la revendication 1 ou 2 caractérisé en ce qu'il comprend les organes suivants:

— une mémoire tampon (M6) destinée à mémoriser temporairement les paquets reçus et à introduire sur le premier paquet de chaque période de signal actif le retard additionnel éventuel;
— un banc de cinq dispositifs de mémoire (M1, M2, M3, M4, M5) destinés à mémoriser, pour chaque paquet, respectivement: le numéro d'ordre diminué d'une unité (k—1); le temps de formation d'un paquet ($T_s$); la valeur du retard minimum ($T\lambda$) que le premier paquet de chaque période de signal actif doit subir; le temps global de service (Td); l'instant du départ du premier paquet d'une période de signal actif ($t_s$);
— une autre mémoire (M7), connectée à la première mémoire (M1) dudit banc et destinée à stocker le contenu de ladite mémoire à chaque mise à jour de celle-ci;
— un premier comparateur (C1), qui comporte une entrée connectée à la première mémoire (M1) du banc et une seconde entrée connectée à un seuil de comparaison fixe et égal à zéro, et qui compare le contenu de ladite mémoire (M1) avec le seuil et signale si le paquet traité est le premier d'une période de signal actif ou non;
— un registre multiplicateur (RM), connecté à la première et à la seconde mémoires (M1, M2) du banc et destiné à calculer le temps $[(k—1)T_s]$ écoulé entre la transmission du premier paquet d'une période de signal actif et la transmission du paquet en cours de traitement;
— une horloge programmable (OP) qui marque le temps à partir de l'instant de réception, pour la première fois, d'un paquet relatif à une conversation et qui, dès l'arrivée d'un paquet, est avancée vers la valeur minimum ($t_x$) possible pour l'instant d'arrivée d'un tel paquet, jusqu'à ce que la valeur marquée ($t_r$) est supérieure ou égale à cette valeur minimum ($t_x$);
— un registre additionneur (RS) qui est connecté au registre multiplicateur (RM), à l'horloge programmable (OP) et à la troisième, quatrième, cinquième mémoires (M3, M4, M5) dudit banc, pour calculer la valeur minimum ($t_x$) possible pour l'instant d'arrivée, pour estimer le retard ($t_d$) subi par le premier paquet d'une période de signal actif, et pour déterminer, d'après ce retard, le retard additionnel éventuel ($T\lambda—t_d$) que le premier paquet doit subir;
— un second comparateur (C2) à deux entrées, apte à signaler soit l'égalité entre deux valeurs présentes sur ces entrées, soit laquelle des deux valeurs est la plus grande en cas d'inégalité, lesdites entrées étant connectées tour à la première mémoire dudit banc (M1) et à l'autre mémoire (M7) pour reconnaître l'arrivée d'un nouveau paquet, ou au registre additionneur (RS) et à l'horloge programmable (OP) pour comparer le temps ($t_r$) marqué par l'horloge (OP) avec la valeur minimum ($t_x$) possible pour l'instant d'arrivée d'un paquet, ou bien à la troisième mémoire du banc (M3) et au registre additionneur (RS), pour déterminer si le retard estimé ($t_d$) pour le premier paquet d'une période de signal actif est encore inférieur au retard minimum à introduire ($T\lambda$);
— une première porte (P1) apte à établir la connexion entre la mémoire tampon (M6) et lórdinateur du noeud;
— six autres portes (P2 ... P7) aptes à établir les connexions entre les divers organes du dispositif;
— un réseau logique séquentiel (LC) programmé de façon à commander l'ouverture de ces portes sur la base des informations qu'il reçoit des premier et second comparateurs (C1, C2) et du registre additionneur (RS).

**Patentansprüche**

1. Verfahren zur Rekonstruktion Sprechsignals am Empfängerknoten eines Fernmeldenetzes mit paketgeschalteter Nachrichtenübertragung, bei dem ein Senderknoten aus digitalisierten Abtastwerten des Signals, das sich auf die aktiven Signalperioden (Sprechphasen) bezieht, unter Verwendung einer Taktzeitzählung des Senderknotens aufgebaute Pakete abgibt, welche mit einer von Paket zu Paket sich ändernden zufälligen Verzögerung empfangen werden, wobei die Empfangsoperationen von einer Taktzeitzählung des Empfängerknotens gesteuert werden und man das empfangene Paket vorübergehend vor seiner durch die Taktzeitzählung des Empfängerknotens gesteuerten Einfügung in die Ausgangsschlange des Empfängerknotens um eine veränderliche Zeitspanne so speichert, daß die Gesamtverzögerung, der dieses Paket unterworfen wird, nicht kleiner wird als eine gegebene Minimalverzögerung, dadurch gekennzeichnet, daß die Taktzeitzählung ($t_r$) des Empfängerknotens unabhängig von der Taktzeitzählung des Senderknotens ist und bei Empfang des ersten empfangenen Pakets eines Gesprächs in Gang gesetzt wird, und daß man die veränderliche Zeitspanne von einer Schätzung der Verzögerung ($t_d$), der das erste Paket jeder Sprechphase unterworfen ist, abhängig macht, wobei man die Schätzung durch eine progressive Synchronisation der Taktzeitzählungen des Empfängerknotens und des Senderknotens zunehmend zum tatsächlichen Wert dieser Verzögerung, der das erste Paket jeder Sprechphase unterworfen ist, konvergieren läßt.

2. Verfahren nach Anspruch 1, dadurch gekennzeichnet, daß man die Synchronisation so bewirkt: man bestimmt den möglichen Minimalwert ($t_x$) für den Ankunftszeitpunkt jedes Pakets auf der Basis der zum Aufbauen all der vorhergehenden Pakete benötigten Zeit, der Entstehungszeit ($t_s$) des ersten Pakets der Sprechphase und der fest bestimmbaren Betriebezeit (Td) des Netzes, man vergleicht den Minimalwert ($t_x$) mit einem vom Takigeber (OP) des Empfängerknotens angegebenen Zeitzählwert ($t_r$) und man schiebt den Takt des Empfängerknotens auf die Minimalverzögerung ($t_x$) im Fall, daß dieser höher ist als der vom Empfänger-Taktgeber (OP) angegebene Wert ($t_r$), vor.

3. Dem Empfängerknoten eines Fernmeldenetzes mit paketgeschalteter Nachrichtenübertragung zugeordnete Vorrichtung zum Durchführen des Verfahrens nach Anspruch 1 oder 2, gekennzeichnet durch die folgenden Einheiten:

— einen Pufferspeicher (M6), der die empfangenen Pakete vorübergehend speichert und für das erste Paket jeder Sprechphase die mögliche zusätzliche Zeitspanne einführt;
— eine Reihe von fünf Speichervorrichtungen (M1, M2, M3, M4, M5), die jeweils für jedes der Pakete eine der folgenden Größen speichern: die um 1 Einheit erniedrigte laufende Nummer ($k-1$); die zum Bilden eines Pakets benötigte Zeit (Ts); den Wert der Mindestverzögerung (T$\lambda$), der das erste Paket jeder Sprechphase unterworfen werden muß; die gesamte Betriebszeit (Td); und die Entstehungszeit ($t_s$) des ersten Pakets der Sprechphase;
— einen weiteren, mit der ersten Speichervorrichtung (M1) der Reihe verbundenen Speicher (M7), der den Inhalt der ersten Speichervorrichtung (M1) jedesmal dann speichert, wenn diese erste Speichervorrichtung fortgeschrieben wird;
— einen ersten Komparator (C1), von dem ein Eingang mit der ersten Speichervorrichtung (M1) der Reihe und ein zweiter Eingang mit einer festen Vergleichsschwelle, die 0 beträgt, verbunden ist und der den Inhalt der Speichervorrichtung (M1) mit dieser Schwelle vergleicht und signalisiert, ob das gerade verarbeitete Paket das erste der Sprechphase ist oder nicht;
— ein multiplizierendes Register (RM), das mit der ersten Speichervorrichtung (M1) und mit der zweiten Speichervorrichtung (M2) der Reihe verbunden ist und die zwischen dem Senden des ersten Pakets der Sprechphase und dem Senden des gerade verarbeiteten Pakets verstrichene Zeit [$(k-1)$Ts] berechnet;
— einen programmierbaren Takigeber (OP), der als Wert ($t_r$) die seit dem Zeitpunkt des ersten Empfangs eines sich auf ein Gespräch beziehenden Pakets verstrichene Zeit angibt und der beim Eintreffen eines Pakets bis zum möglichen Minimalwert ($t_x$) für den Zeitpunkt der Ankunft dieses Pakets vorgeschoben wird, bis dieser Wert ($t_r$) gleich dem Minimalwert ($t_x$) oder höher als dieser ist.;
— ein addierendes Register (RS), das mit dem multiplizierenden Register (RM), dem programmierbaren Taktgeber (OP) sowie der dritten, vierten und fünften Speichervorrichtung (M3, M4, M5) der Gruppe zum Berechnen des für den Zeitpunkt des Eintreffens möglichen Minimalwerts ($t_x$) zum Schätzen der Verzögerung ($t_d$), der das erste Paket der Sprechphase unterworfen ist, und zum Bestimmen, auf der Basis dieser Verzögerung, der möglichen zusätzliichen Zeitspanne (T$\lambda-t_d$), der dieses Paket unterworfen ist, verbunden ist;

— einen zweiten Komparator (C2) mit zwei Eingängen der Bauart, daß er entweder signalisieren kann, daß zwei an seinen Eingängen anliegende Werte gleich sind, oder, im Fall von Ungleichheit, signalisieren kann, welcher der Werte höher ist, wobei sine Eingänge ihrerseits mit der ersten Speichervorrichtung (M1) der Reihe bzw. mit dem weiteren Speicher (M7) zum Erkennen des Eintreffens eines neuen Pakets verbunden sind, oder mit dem addierenden Register (RS) bzw. dem programmierbaren Taktgeber (OP) zum Vergleichen des vom Taktgeber (OP) angegebenen Zeitzählwerts ($t_r$) mit dem möglichen Minimalwert ($t_x$) für den Eintreffzeitpunkt eines Pakets verbunden sind, oder aber mit der dritten Speichervorrichtung (M3) der Reihe bzw. mit dem addierenden Register (RS) zur Bestimmung, ob die geschätzte Verzögerung ($t_d$) für das erste Paket der Sprechphase noch unter der einzuführenden Mindest-Zeitspanne (T$\lambda$) liegt, verbunden ist;

— ein erstes Tor (P1), das die Verbindung zwischen dem Pufferspeicher (M6) und dem Prozessor des Knotens herstellt;

— sechs weitere Tore (P2, ... P7) die die Verbindungen zwischen den verschiedenen Einheiten der Vorrichtung herstellen;

— eine Schaltung (LS) mit sequentieller Logik, die zum Steuern des Öffnens der Tore auf der Basis der Informationen, die sie vom ersten und vom zweiten Komparator (C1, C2) und vom addierenden Register (RS) empfängt, programmiert ist.

FIG. 1

FIG. 2

SR

**0016477**

START
(BEGINNING OF A CONVERSATION)

RESET $t_r$, $t_s$
WRITE −1 in M1, M7

NEW PACKET
(M1≠M7)?

NO → WAIT $t_1$ sec

YES

STORE PACKET IN
M 6 - READ M1, M2,
M4, M5 - START OP

COMPUTE
$t_x = (k-1) Ts + Td + t_s$

$t_x < t_r$?   NO → SET $t_r = t_x$

YES

OPEN P1 - INTRODUCE
PACKET INTO OUTPUT
QUEUE OF THE NODE

NO ← $k = 1$?

YES

COMPUTE $t_d = t_r - t_x$
READ M3

NO ← $T_\lambda > t_d$?

YES

WAIT $T_\lambda - t_d$
Sec

2